(19) **Europäisches Patentamt / European Patent Office / Office européen des brevets**

(11) **EP 4 535 105 A1**

(12) **EUROPEAN PATENT APPLICATION**
published in accordance with Art. 153(4) EPC

(43) Date of publication:
09.04.2025 Bulletin 2025/15

(21) Application number: 23815747.3

(22) Date of filing: 15.05.2023

(51) International Patent Classification (IPC):
**G05B 19/418** (2006.01)   **G06Q 50/04** (2012.01)

(52) Cooperative Patent Classification (CPC):
**G05B 19/418; G06Q 50/04**

(86) International application number:
**PCT/JP2023/018091**

(87) International publication number:
**WO 2023/233987 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  02.06.2022  JP 2022090226

(71) Applicant: **Amada Co., Ltd.**
**Isehara-shi, Kanagawa 259-1196 (JP)**

(72) Inventor: **TOMIOKA Akihiro**
**Isehara-shi, Kanagawa 259-1196 (JP)**

(74) Representative: **Grünecker Patent- und Rechtsanwälte**
**PartG mbB**
**Leopoldstraße 4**
**80802 München (DE)**

(54) **WORK MANAGEMENT DEVICE, WORK MANAGEMENT SYSTEM, WORK MANAGEMENT METHOD, AND WORK MANAGEMENT PROGRAM**

(57)    A work management device is configured to be able to execute: a work process division process of dividing pieces of production arrangement information, each of the pieces of production arrangement information including information about one of products, including one or more parts, and pieces of information about one or more of work processes for producing the products and parts of the product according to pieces of information about the individual work processes, into pieces of work process information; and a grouping process of grouping the pieces of work process information corresponding to the divided plurality of pieces of production arrangement information. The work management device includes an input unit and is configured to make it possible to manually group the pieces of work process information via the input unit.

FIG.1

EP 4 535 105 A1

## Description

Technical Field

The present invention relates to a work management device, a work management system, a work management method, and a work management program.

Background Art

Conventionally, there have been combined machining systems for sheet metal processing, each of which is configured with a production management system, an equipment processing information creation device (a sheet metal CAD/CAM), a process progress management device, a general equipment management device, and a work equipment group (Patent Literature 1 and the like). The production management system is for managing production arrangement, progress information, and stock information about production management of the entire system, and exchanges the pieces of information with the process progress management device.

The equipment processing information creation device creates processing information about hole punching/-cutting processes to bending/assembly processes of each workpiece, and has a workpiece processing information creation function, a placement processing (nesting) function, and an accumulated workpiece package information editing function. Among the functions, the placement processing (nesting) function is for creating a sheet program, sheet information, and a processing schedule by performing placement of a workpiece (part) group to be processed by each piece of work equipment on raw material under specified classification conditions. Items of the specified classification conditions include information such as raw material information, thickness, material, raw material dimensions, used tools information, delivery due date, a manufacturing order number, and a post-process destination.

Citation List

Patent Literature

Patent Literature 1: Japanese Patent Application Laid-Open Publication No. 2003-208211

Summary

Technical Problem

In a conventional sheet metal product manufacturing system, however, production management, a placement process (nesting), and manufacturing work are generally performed based on production arrangements and manufacturing order numbers, and, therefore, products and parts of the same type are handled as those for which separate manufacturing work is to be performed, for example, if production arrangements and manufacturing order numbers thereof are different. Therefore, there is a problem that more invoices for the products and parts of the same type than necessary are duplicately issued. Further, there is a problem that, if separate production arrangements are made for the products and parts of the same type, setup work that is originally required to be performed once is required the number of times corresponding to the number of production arrangements. Furthermore, there is a problem that, because an actual result is inputted for each production arrangement, it is required to input an actual result a plurality of times if separate production arrangements are made for the products and parts of the same type.

One aspect of the present invention is a work management device, a work management system, a work management method, and a work management program capable of eliminating wasteful duplicate management and duplicate work.

Solution to Problem

A work management device according to the one aspect of the present invention is configured to be able to execute: a work process division process of dividing pieces of production arrangement information, each of the pieces of production arrangement information including information about one of products, including one or more parts, and pieces of information about one or more of work processes for producing the parts and the product according to pieces of information about the individual work processes, into pieces of work process information; and a grouping process of grouping the pieces of work process information corresponding to the divided plurality of pieces of production arrangement information into work groups.

A work management system according to the one aspect of the present invention includes a work management device and a production management unit; the work management device is configured to be able to execute: a work process division process of dividing pieces of production arrangement information, each of the pieces of production arrangement information including information about one of products, including one or more parts, and pieces of information about one or more of work processes for producing the parts and the product according to pieces of information about the individual work processes, into pieces of work process information; and a grouping process of grouping the pieces of work process information corresponding to the divided plurality of pieces of production arrangement information into work groups; and the production management unit is configured to create the pieces of production arrangement information.

A work management method according to the one aspect of the present invention includes: dividing pieces of production arrangement information, each of the pieces of production arrangement information including information about one of products, including one or more parts, and pieces of information about one or more of work processes for producing the parts and the product according to pieces of information about the individual work processes, into pieces of work process information; and grouping the pieces of work process information corresponding to the divided plurality of pieces of production arrangement information into work groups.

A work management program according to the one aspect of the present invention is configured to cause a work management device to execute: a work process division process of dividing pieces of production arrangement information, each of the pieces of production arrangement information including information about one of products, including one or more parts, and pieces of information about one or more of work processes for producing the parts and the product according to pieces of information about the individual work processes, into pieces of work process information; and a grouping process of grouping the pieces of work process information corresponding to the divided plurality of pieces of production arrangement information into work groups.

According to the work management device, the work management system, the work management method, and the work management program according to the one aspect of the present invention, because work is managed not for each of pieces of production arrangement information but by making groups based on work processes included in the pieces of production arrangement information, it is possible to eliminate wasteful duplicate management and duplicate work.

Advantageous Effects of Invention

According to a work management device, a work management system, a work management method, and a work management program according to one aspect of the present invention, it is possible to eliminate wasteful duplicate management and duplicate work.

Brief Description of Drawings

[Figure 1] Figure 1 is a schematic diagram showing a work management system according to an embodiment of the present invention.
[Figure 2] Figure 2 is a functional block diagram showing a work management device in this embodiment.
[Figure 3] Figure 3 is a functional block diagram showing a workplace terminal in this embodiment.
[Figure 4] Figure 4 is a diagram showing examples of pieces of production arrangement information and pieces of work process information in this embodiment.
[Figure 5] Figure 5 is a diagram showing a first grouping pattern for the pieces of work process information in this embodiment.
[Figure 6] Figure 6 is a diagram showing a second grouping pattern for the pieces of work process information in this embodiment.
[Figure 7] Figure 7 is a diagram showing a third grouping pattern for the pieces of work process information in this embodiment.
[Figure 8] Figure 8 is a diagram showing an example of a workplace setting screen in this embodiment.
[Figure 9] Figure 9 is a diagram showing an example of a work process information grouping screen in this embodiment.
[Figure 10] Figure 10 is a diagram showing an example of a work group set setting screen in this embodiment.
[Figure 11] Figure 11 is a diagram showing an example of a work record management screen in this embodiment.
[Figure 12] Figure 12 is a diagram showing an example of the work record management screen in this embodiment.
[Figure 13] Figure 13 is a flowchart showing an example of a work management method in this embodiment.

Description of Embodiment

Hereinafter, the best embodiment for embodying the present invention will be described with reference to the drawings. Note that the following embodiment do not limit the invention related to each claim, and all of the combinations of features described in the embodiment are not necessarily essential to the solution of the invention.

[Overall Configuration of Work Management System According to This Embodiment]

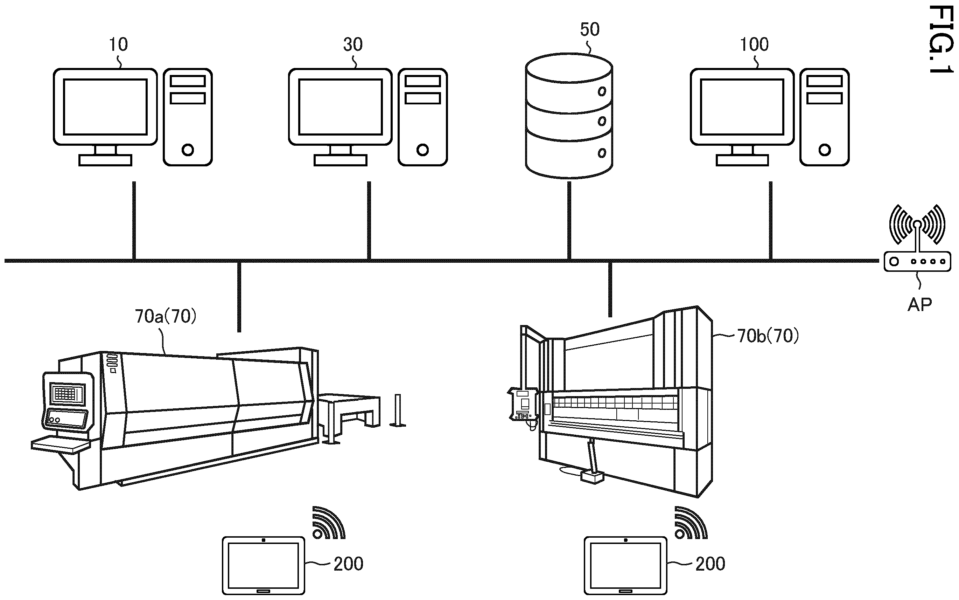

Figure 1 is a schematic diagram showing a work management system according to an embodiment of the present invention.

First, a work management system 1 according to the embodiment of the present invention will be outlined with reference to Figure 1. The work management system 1 according to this embodiment is a work management system for managing a series of part and product production work, including blanking for cutting out one metal plate (hereinafter, a sheet in this embodiment) with fixed dimensions in an arbitrary shape. The work management system 1 schematically includes a production management device 10 that functions as a production management unit and a work management device 100 as shown in Figure 1. Further, the work management system 1 includes a design aided device 30 that functions as a design aided unit, a server 50, a processing machine 70, and workplace terminals 200.

The production management device 10, the design aided device 30, the server 50, the processing machine 70, the work management device 100, and the workplace terminals 200 are mutually communicably connected. These devices are mutually communicably connected via a private network such as a local network or an intranet. In the case of connecting the devices via wireless communication, the work management system 1 may further include one or more access points AP.

The production management device 10 is an electronic computer such as a desktop personal computer, a laptop computer, or a tablet terminal. The production management device 10 performs management of order information, product information including one or more parts, product and part production process information, and progress information about each process, and makes product production arrangements. Further, the production management device 10 is configured to, at the time of making production arrangements for a product, create a piece of production arrangement information 12 about the product. The production management device 10 stores the created piece of production arrangement information 12 in a production technology management database of the server 50, which is to be described later.

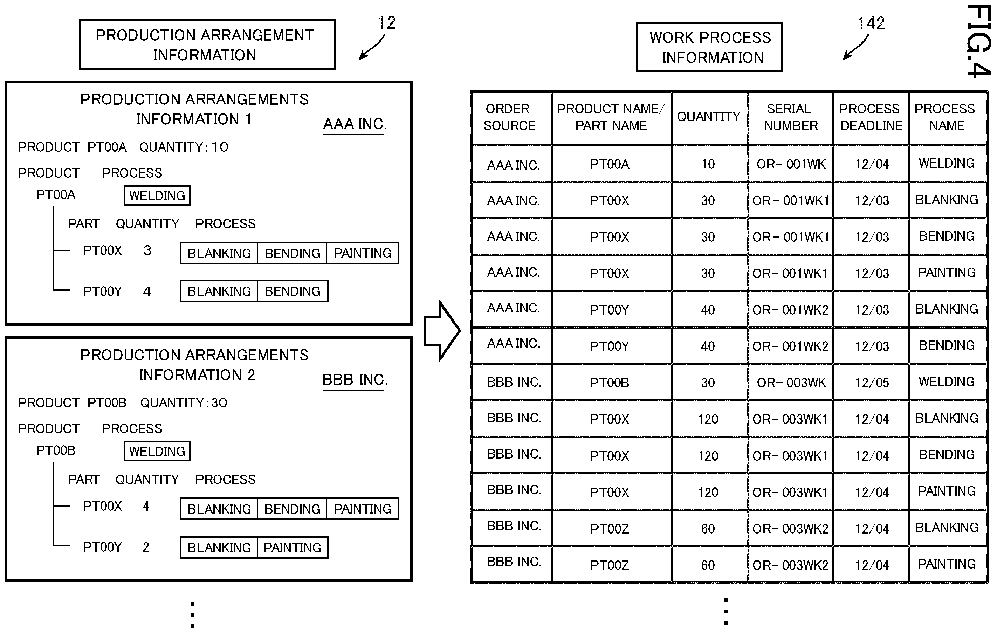

Figure 4 is a diagram showing examples of pieces of production arrangement information and pieces of work process information in this embodiment.

Each piece of production arrangement information 12 includes information about a product including one or more parts, and information about one or more work processes for producing the parts and the product. Further, each piece of production arrangement information 12 includes information about an order source, a processing program for the parts, and the like. For example, as shown in Figure 4, the information about the product includes a product name, part names, the quantity of product and of each part, serial numbers of the product and the parts, and the like. The information about work processes is information showing processes until the product is completed, for example, a blanking process for performing blanking, a secondary process performed after the blanking, such as bending, painting, and deburring, and an assembling process for welding, screw fastening, inspection, and the like, and includes manufacturing process information about the product and the parts, a production delivery date of the product and the parts, a process deadline of each process, and the like.

Furthermore, the production management device 10 is configured to be capable of outputting a production arrangement sheet as an invoice for each created piece of production arrangement information 12. Furthermore, the production management device 10 is configured to be able to execute a production arrangement information extraction process of extracting only parts and products included in each of work groups to be described later, from a plurality of pieces of production arrangement information 12 to obtain pieces of group production arrangement information 12' for the work groups, respectively, and an invoice issuance process of issuing a group production arrangement sheet for each of the pieces of group production arrangement information 12' as an invoice.

The design aided device 30 is an electronic computer such as a desktop personal computer, a laptop computer, or a tablet terminal, and includes CAD (computer-aided design)/CAM (computer-aided manufacturing) software. The design aided device 30 performs, for each work group or for each work group set to be described later, nesting in which the processing programs of parts included in the work group or the work group set are arranged without gaps.

Further, the design aided device 30 creates processing schedule information about a nested sheet data. The design aided device 30 stores the created processing schedule information in the production technology management database of the server 50. Furthermore, the design aided device 30 is configured to be able to output a schedule instruction sheet of the created processing schedule information. In this embodiment, the processing schedule information may be a concept encompassing both a compilation of processing schedule information relating to a plurality of sheet data and processing schedule information relating to a single sheet data, or may be either one of them.

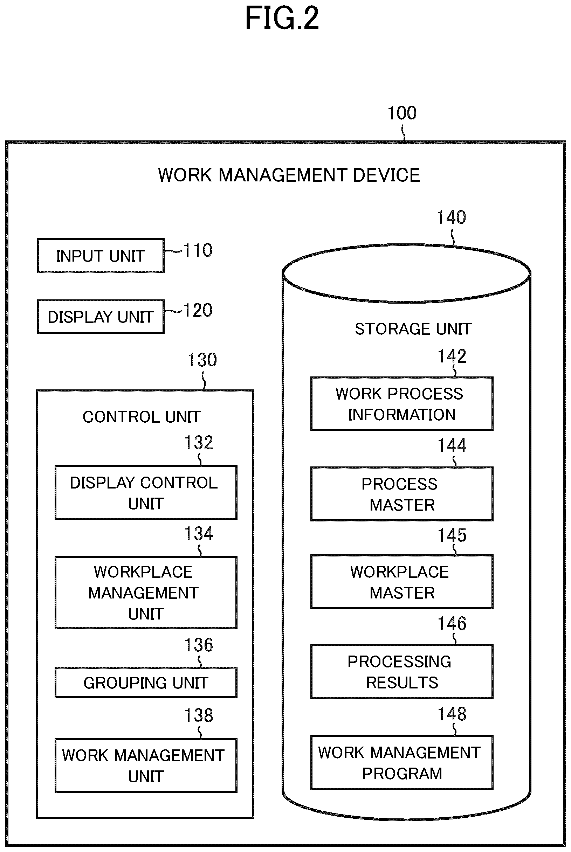

Figure 2 is a functional block diagram showing the work management device in this embodiment.

The work management device 100 is an electronic computer such as a desktop personal computer, a laptop computer, or a tablet terminal, and includes an input unit 110, a display unit 120, a control unit 130, and a storage unit 140 as shown in Figure 2. The work management device 100 divides pieces of production arrangement information 12 created by the production management device 10 according to pieces of information about individual work processes, into pieces of work process information 142, and manages work of the pieces of production arrangement information 12 in work process information 142 units.

The input unit 110 is composed of input devices such as a keyboard, a mouse, a touchpad, and a joystick, and in addition to the information input function normally required in the work management device 100, enables operations such as grouping of the pieces of work process information 142 by operating the input unit 110. By having such a configuration, the work management device 100 makes it possible to manually group pieces of work process information 142 via the input unit 110.

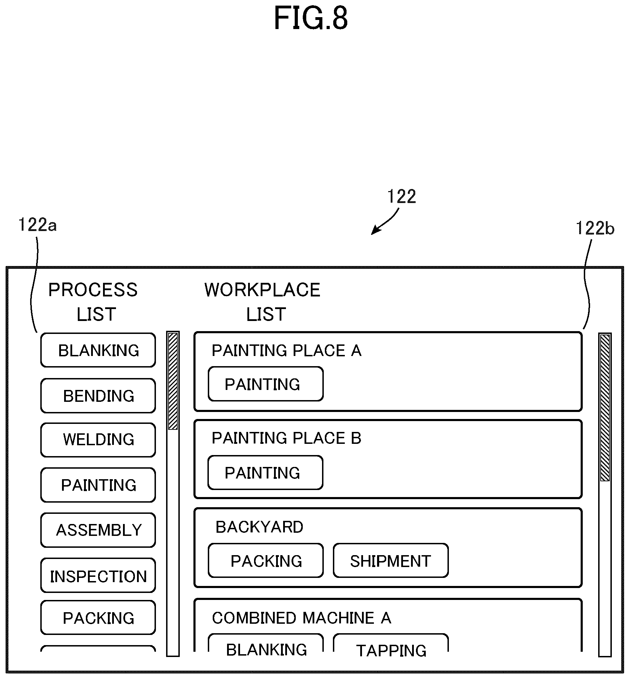

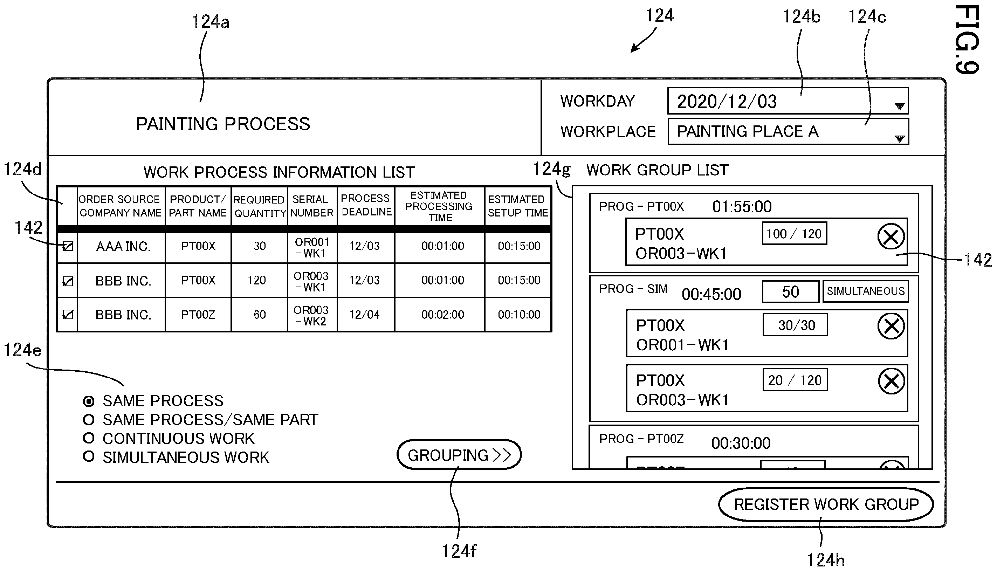

Figure 8 is a diagram showing an example of a workplace setting screen in this embodiment. Figure 9 is a diagram showing an example of a work process information grouping screen in this embodiment.

The display unit 120 includes a display as a display device, and displays, for example, a workplace setting screen 122 and a work process information grouping screen 124 as shown in Figures 8 and 9, in addition to the screen display function that the work management device 100 is generally required. Further, the display unit 120 can be configured with a touch panel (a touch screen) having the functions of the input unit 110. When the display unit 120 is configured with a touch panel, for example, it becomes possible for a user, for example, to input grouping of the pieces of work process information 142 to the work management device 100 by operating the display unit 120.The display unit 120 has a display as a display device, and in addition to the screen display function normally required in the work management device 100, displays, for example, a workplace setting screen 122 and a work process information grouping screen 124, as shown in Figures 8 and 9. Further, the display unit 120 may be configured with a touch screen having the functions of the input unit 110. When the display unit 120 is configured with a touch panel, a user can input grouping of the pieces of work process information 142 to the work management device 100 by operating the display unit 120, for example.

Note that the configurations of the input unit 110 and the display unit 120 are not limited to the above-described configurations, and are not limited to them as long as they have equivalent functions instead of the input unit 110 and the display unit 120 (e.g., display means or input means that can be used remotely).

The control unit 130 is configured, for example, with an integrated arithmetic calculation processing device including a CPU (central processing unit) and a GPU (graphics processing unit). As shown in Figure 2, the control unit 130 includes a display control unit 132 that controls the display unit 120, a workplace management unit 134, a grouping unit 136, and a work management unit 138.

The workplace management unit 134 is configured to set and manage a work process handled at each workplace in a factory. Specifically, the workplace management unit 134 associates each work process managed by the production management device 10 with a workplace in the factory. Here, a method for associating each work process with a workplace in the factory using the workplace setting screen 122 will be described with reference to Figure 8.

As shown in Figure 8, the workplace setting screen 122 includes a work process list display area 122a and a workplace list display area 122b. The work process list display area 122a includes a list of work processes registered with a process master 144 in the storage unit 140, which is to be described later. The workplace list display area 122b includes a list of workplaces registered with a workplace master 145 in the storage unit 140, which is to be described later.

For example, in the case of setting Painting process as a work process handled at Painting place A, Painting place A and Painting process are associated by selecting "Painting" from the work process list display area 122a and selecting "Painting place A" of the workplace list display area 122b. By selecting a process from the work process list display area 122a and dragging and dropping the selected process to a workplace in the workplace list display area 122b, the process and the workplace may be associated.

As shown in Figure 4, the grouping unit 136 is configured to be able to execute a work process division process of dividing pieces of production arrangement information 12 according to pieces of information about individual work processes, into pieces of work process information 142. For example, each piece of work process information 142 includes information about an order source, a product name or a part name, the quantity of the product or the part, a serial number of the product or the part, a work process name of the product or the part, and a process deadline of the work process.

Further, the grouping unit 136 is configured to be able to execute a grouping process of grouping the pieces of work process information 142 corresponding to the divided plurality of pieces of production arrangement information 12 into work groups. Here, grouping patterns used for the grouping process executed by the grouping unit 136 will be described. In this embodiment, the grouping unit 136 is configured to be capable of grouping the pieces of work process information 142 in first to third grouping patterns shown below. However, the grouping unit 136 is not limited thereto and can group the pieces of work process information 142 in a grouping pattern other than the three patterns.

[First Grouping Pattern]

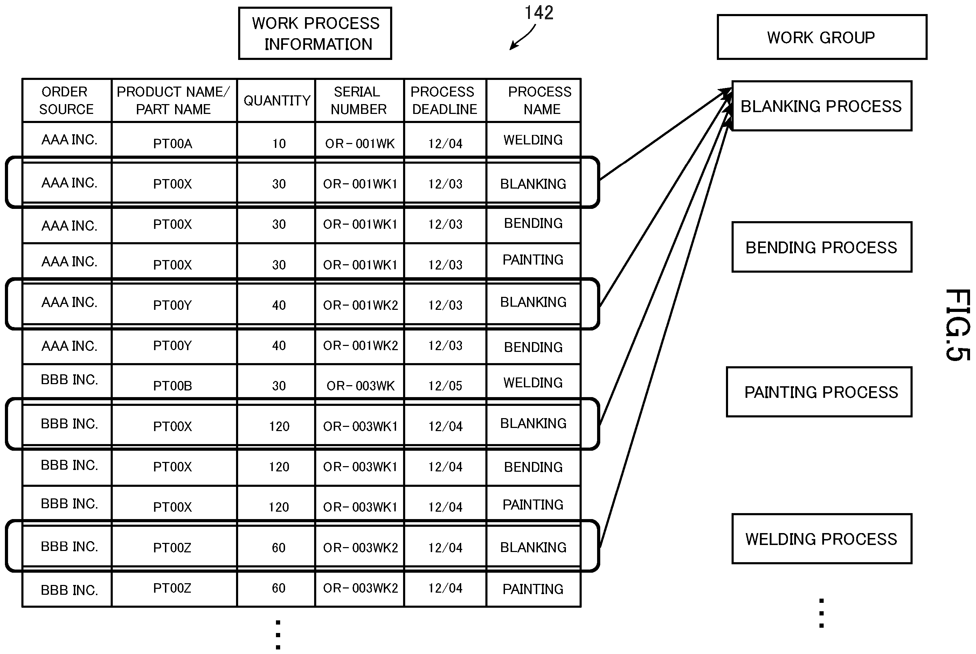

Figure 5 is a diagram showing the first grouping pattern for the pieces of work process information in this embodiment.

As shown in Figure 5, the grouping unit 136 is configured to be capable of grouping the pieces of work process information 142 into work groups such that a plurality pieces of work process information 142 including pieces of information about work processes of the same type, respectively, are grouped as one work group. The grouping unit 136 identifies whether pieces of work process information 142 are information about work processes of the same type or not based on work process names included in the pieces of work process information 142 in this embodiment but is not limited thereto.

In the first grouping pattern, the grouping unit 136 groups, for example, pieces of work process information 142 including a work process name of "Blanking" as a work group "Blanking process". Similarly, the grouping unit 136 groups pieces of work process information 142 including a work process name of "Bending" as a work group "Bending process". Further, the grouping unit 136 groups pieces of work process information 142 including a work process name of "Painting" as a work group "Painting process". Furthermore, the grouping unit 136 groups pieces of work process information 142 including a work process name of "Welding" as a work group "Welding process".

[Second Grouping Pattern]

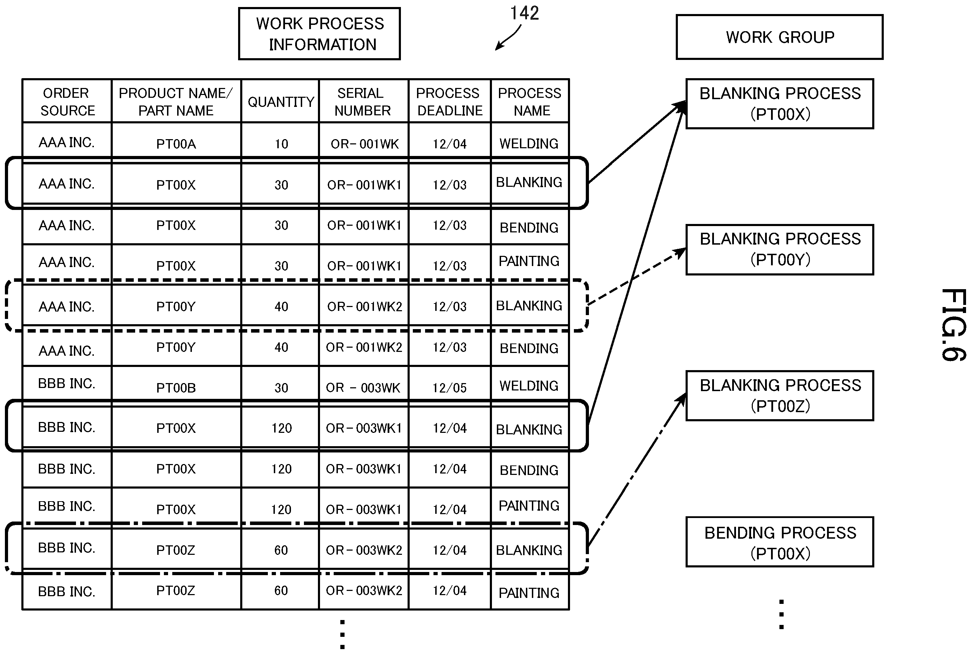

Figure 6 is a diagram showing a second grouping pattern for the pieces of work process information in this embodiment.

As shown in Figure 6, the grouping unit 136 is configured to be capable of grouping the pieces of work process information 142 into work groups such that a plurality pieces of work process information 142 including pieces of information about parts or products of the same type and pieces of information about work processes of the same type, respectively, are grouped as one work group. The grouping unit 136 identifies whether pieces of work process information 142 are information about parts or products of the same type or not based on product names or part names included in the pieces of work process information 142 and identifies whether pieces of work process information 142 are information about work processes of the same type or not based on work process names included in the pieces of work process information 142 in this embodiment but is not limited thereto.

In the second grouping pattern, the grouping unit 136 groups, for example, pieces of work process information 142 including a work process name of "Blanking" and a part name of "PT00X" as a work group "Blanking process (PT00X)". Similarly, the grouping unit 136 groups pieces of work process information 142 including a work process name of "Blanking" and a part name of "PT00Y" as a work group "Blanking process (PT00Y)".

Further, the grouping unit 136 groups pieces of work process information 142 including a work process name of "Blanking" and a part name of "PT00Z" as a work group "Blanking process (PT00Z) ". Furthermore, the grouping unit 136 groups pieces of work process information 142 including a work process name of "Bending" and a part name of "PT00X" as a work group "Bending process (PT00X)". Furthermore, the grouping unit 136 groups pieces of work process information 142 including a work process name of "Welding" and a product name of "PT00A" as a work group "Welding process (PT00A)".

[Third Grouping Pattern]

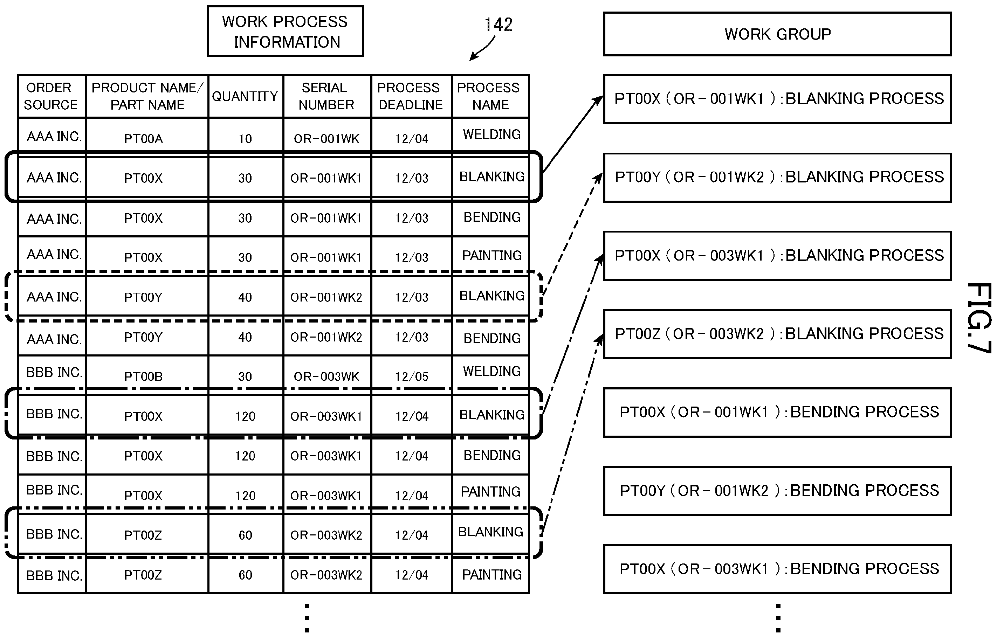

Figure 7 is a diagram showing a third grouping pattern for the pieces of work process information in this embodiment.

As shown in Figure 7, the grouping unit 136 is configured to be capable of grouping the pieces of work process information 142 into work groups such that each of the individual pieces of work process information 142 is grouped as one work group. The grouping unit 136 identifies information about each work process based on a work process name included in each of the pieces of work process information 142 and an identifier (for example, a serial number) that is allocated to each product or part and can uniquely identify the product or part in this embodiment but is not limited thereto.

In the third grouping pattern, the grouping unit 136 groups, for example, pieces of work process information 142 including a work process name of "Blanking" and a serial number of "OR-001WK1" as a work group "Blanking process (PT00X: OR-001WK1)". Similarly, the grouping unit 136 groups pieces of work process information 142 including a work process name of "Blanking" and a serial number of "OR-001WK2" as a work group "Blanking process (PT00Y: OR-001WK2)".

Further, the grouping unit 136 groups pieces of work process information 142 including a work process name of "Blanking" and a serial number of "OR-003WK1" as a work group "Blanking process (PT00X: OR-003WK1)". Furthermore, the grouping unit 136 groups pieces of work process information 142 including a work process name of "Blanking" and a serial number of "OR-003WK2" as a work group "Blanking process (PT00Z: OR-003WK2)".

Furthermore, the grouping unit 136 groups pieces of work process information 142 including a work process name of "Bending" and a serial number of "OR-001WK1" as a work group "Bending process (PT00X: OR-001WK1)".

Furthermore, in the third grouping pattern, pieces of work process information 142 about a plurality of work processes performed continuously and pieces of work process information 142 about a plurality of work processes performed simultaneously can be grouped as a continuous work group and a simultaneous work group, respectively. The continuous work group can be used, for example, for a blanking process of continuously processing a plurality of sheets by autonomous operation and a bending process of continuously performing processing with the same tool. The simultaneous work group can be used, for example, for a painting process, and a surface treatment process such as plating, and the like in which work can be performed simultaneously for a plurality of parts and products.

The grouping unit 136 is configured to judge whether a quantity of the parts and of the products included in each of the grouped work groups exceeds a workable quantity specified in advance, create a new work group if judging that the workable quantity is exceeded, and assign an excess of the parts and the products to the new work group. For example, in the blanking process, products and parts included in one work group are nested on one sheet by the design aided device 30 and are subjected to blanking by a blanking machine 70a to be described later. Therefore, if the quantity of products and parts included in pieces of work process information 142 in a work group exceeds a quantity that can be nested on one sheet, that is, the workable quantity, the grouping unit 136 creates a new work group and assigns excessive parts and products to the new work group.

Further, the grouping unit 136 is configured to be able to execute a work process identification process of identifying the work processes from the pieces of work process information 142 included in the grouped work groups, respectively, and a workplace association process of associating the work groups with pieces of information about workplaces to implement the identified work processes, respectively.

As shown in Figure 9, the user can manually set and confirm a work group on the work process information grouping screen 124 displayed on the display unit 120. The work process information grouping screen 124 includes a work process display area 124a, a workday setting portion 124b, a workplace setting portion 124c, a work process information list display area 124d, a grouping pattern selection area 124e, a grouping button 124f, a work group list display area 124g, and a group registration button 124h.

The work process display area 124a displays the name of a work process being viewed. Further, the work process display area 124a is configured such that any of the work processes registered with the process master 144 in the storage unit 140 can be selected. The workday setting portion 124b is configured such that a workday of creating a work group can be selected. The workplace setting portion 124c is configured such that a workplace where the work process of the work group is to be implemented can be selected from the workplaces registered with the workplace master 145 in the storage unit 140.

The work process information list display area 124d displays a list of pieces of work process information 142 that include the work process displayed in the work process display area 124a. Further, the work process information list display area 124d displays estimated setup time and estimated processing time for each of the pieces of work process information 142. Furthermore, the work process information list display area 124d may include checkboxes for selecting pieces of work process information 142 to be grouped.

Hereinafter, it is assumed that, in this embodiment, "processing time" and "processing work" are not limited to processing time and processing work for general processing such as blanking and bending but include processing time and processing work for processing accompanying processing, such as deburring, surface treatment such as painting and plating, assembly work such as welding and screw fastening.

The grouping pattern selection area 124e displays selectable grouping patterns and is configured such that a grouping pattern to be used for grouping can be selected. In this embodiment, the grouping pattern selection area 124e includes "Same process" (the first grouping pattern), "Same process/same part" (the second grouping pattern), "Continuous work" (the third grouping pattern), and "Simultaneous work" (the third grouping pattern) but is not limited thereto. Regarding the grouping button 124f, a work group is created by pressing the grouping button 124f after selecting pieces of work process information 142 to be grouped.

In the work group list display area 124g, a list of created work groups is displayed. The work group list display area 124g displays pieces of work process information 142 included in each work group, and estimated work time for each work group, which is calculated by the work management unit 138 to be described later. The group registration button 124h is pressed at the time of registering a created work group.

The grouping unit 136 is configured to be also capable of collecting a plurality of work groups to make a work group set. By having such a configuration, it is possible to group a plurality of work groups for which it is desired to continuously perform work together, and to group pieces of work process information 142 separated in two or more work groups because of exceeding the workable quantity together.

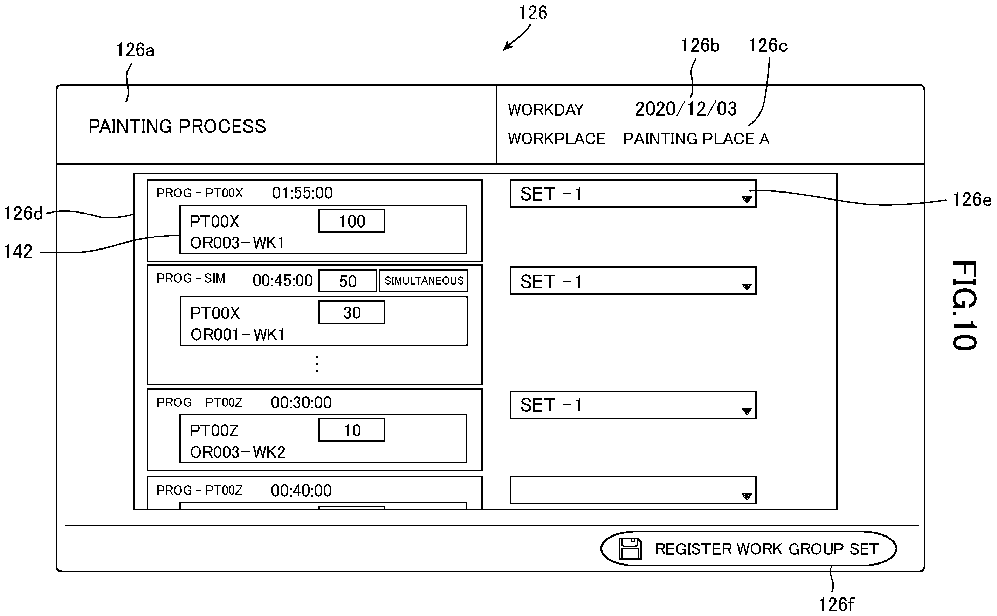

Figure 10 is a diagram showing an example of a work group set setting screen in this embodiment.

As shown in Figure 10, the user can set and confirm a work group set on a work group set setting screen 126 displayed on the display unit 120. The work group set setting screen 126 includes a work process display area 126a, a workday display area 126b, a workplace display area 126c, a work group list display area 126d, group set setting portions 126e, and a group set registration button 126f. The work process display area 126a displays the name of a work process being viewed. Further, the work process display area 126a is configured such that any of the work processes registered with the process master 144 in the storage unit 140 of the work management device 100 can be selected.

The workday display area 126b displays a workday of being viewed. Further, the workday display area 126b is configured to be capable of changing and displaying a workday. The workplace display area 126c displays the name of a workplace being viewed. Further, the workplace display area 126c is configured such that any of the workplaces registered with the workplace master 145 in the storage unit 140 of the work management device 100 can be selected.

The work group list display area 126d displays a list of work groups for which work of a work process displayed in the work process display area 126a is scheduled on a workday displayed in the workday display area 126b at a workplace displayed in the workplace display area 126c. The group set setting portions 126e are provided for the work groups displayed in the work group list display area 126d, respectively, and are configured such that the names of work group sets to be set for the work groups, respectively, can be selected. The group set registration button 126f is pressed at the time of registering a created work group set.

The grouping unit 136 is configured to register created work groups and created work group sets with a work management database of the server 50.

The work management unit 138 is configured to calculate estimated work time for each of the work groups or each of the work group sets grouped by the grouping unit 136. Specifically, for a work process by the processing machine 70 with an NC device, the work management unit 138 calculates estimated work time based on a processing program for the work process. For a work process by the processing machine 70 without an NC device or a work process involving human intervention, such as a painting process and a welding process, the work management unit 138 calculates estimated work time based on actual work time included in past production results managed by the production management device 10.

Estimated work time for each work group is determined by Formula 1 below:

[Formula 1]

$$T_p = t_{sp} + \sum_{i=1}^{n} t_{pp_i} w_{q_i} \qquad \cdots \left( 1 \right)$$

Here, n indicates a total number of pieces of work process information 142 included in each work group; $t_{sp}$ indicates estimated setup work time; $t_{ppi}$ indicates estimated processing time required for processing work per product or part of the i-th piece of work process information 142; and $w_{qi}$ indicates the quantity of the product or part of the i-th piece of work process information 142.

Estimated work time for each of continuous work groups grouped in the third grouping pattern is determined by Formula 2 below.

[Formula 2]

$$T_p = \sum_{i=1}^{n} (t_{sp_i} + t_{pp_i} w_{q_i}) \qquad \cdots \left( 2 \right)$$

Here, $t_{spi}$ indicates estimated setup work time for the i-th piece of work process information 142.

Estimated work time for each of simultaneous work groups grouped in the third grouping pattern is determined by Formula 3 below.

[Formula 3]

$$T_p = \max_{1 \leq i \leq n, i \in \mathbb{N}} \left( t_{sp_i} \right) + \max_{1 \leq i \leq n, i \in \mathbb{N}} \left( t_{pp_i} \right) \qquad \cdots \left( 3 \right)$$

Further, the work management unit 138 is configured to record actual work time required for work of each grouped work group and calculate actual work time for each individual piece of work process information 142 included in the work group from the recorded actual work time. The work management unit 138 hands over the calculated actual work time for each individual piece of work process information 142 to the production management device 10. The actual work time for each individual piece of work process information 142 is determined by Formula 4 below.

[Formula 4]

$$t_a = \sum_{j=1}^{m} \{\left(T_{sa_j} + T_{pa_j}\right)\frac{W_{q_j}}{W_{sum_j}}\} \qquad \cdots\left(4\right)$$

Here, m indicates a total number of work groups to which production quantities are assigned from pieces of work process information 142 from which actual work time is to be derived; $T_{saj}$ indicates actual setup work time for the j-th work group; $T_{pas}$ indicates actual processing work time for the j-th work group; $W_{qj}$ indicates a production quantity of the product or part in the j-th work group; and $W_{sumj}$ indicates a total production quantity of the product or part of the j-th work group.

Furthermore, the work management unit 138 is configured to be capable of, for each of the grouped work groups, recording information about workers related to work of the work group. The information about the workers includes, for example, worker names, employee numbers, work in charge, and work time for the work in charge. By having such a configuration, it becomes possible to record work time for each person in charge of a work process that is more detailed than a work process unit.

The work management device 100 described above is configured such that workers and work time can be recorded and viewed by each of the workplace terminals 200 that are used in the workplaces in the factory.

The storage unit 140 includes storage medium such as an HDD (hard disk drive) and an SSD (solid state drive), and stores various data in a readable and writable manner. As shown in Figure **2,** the storage unit 140 stores the pieces of work process information 142, the process master 144, the workplace master 145, processing results 146, and a work management program 148. Further, the storage unit 140 stores programs necessary for controlling each part of the work management device 100.

The list of work processes handled in the factory is registered with the process master 144. The list of the workplaces in the factory is registered with the workplace master 145. The processing results 146 include processing machine processing results transmitted from the processing machine 70, and actual work time that is recorded by the work management unit 138 of the control unit 130 by operating the work management device 100 and the workplace terminal 200.

The work management program 148 causes the work management device 100 to execute the work process division process of dividing pieces of production arrangement information 12, each of which includes information about a product including one or more parts, and pieces of information about one or more of work processes for producing the parts and the product according to pieces of information about the individual work processes, into the pieces of work process information 142; and the grouping process of grouping the pieces of work process information 142 corresponding to the divided plurality of pieces of production arrangement information 12 into work groups.

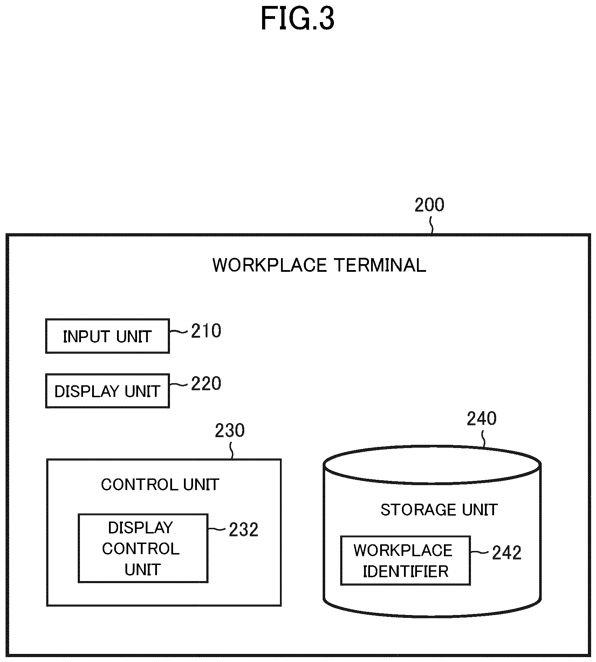

Figure 3 is a functional block diagram showing each workplace terminal in this embodiment.

Each workplace terminal 200 is an electronic computer such as a desktop personal computer, a laptop computer, or a tablet terminal, and includes an input unit 210, a display unit 220, a control unit 230, and a storage unit 240 as shown in Figure **3.** The workplace terminal 200 is configured such that workers and work time for a work process involving human intervention can be recorded and viewed by connecting to the work management device 100.

Preferably, one workplace terminal 200 is arranged at each workplace in the factory. The present invention, however, is not limited thereto, and one workplace terminal 200 may be used at a plurality of workplaces. Each workplace terminal 200 may be an NC device attached to the processing machine 70.

The input unit 210 is composed of input devices such as a keyboard, a mouse, a touchpad, and a joystick, and in addition to the information input function normally required in the workplace terminal device 200, enables operations such as recording work time by operating the input unit 210. By having such a configuration, the workplace terminal 200 makes it possible to manually record work time via the input unit 210.

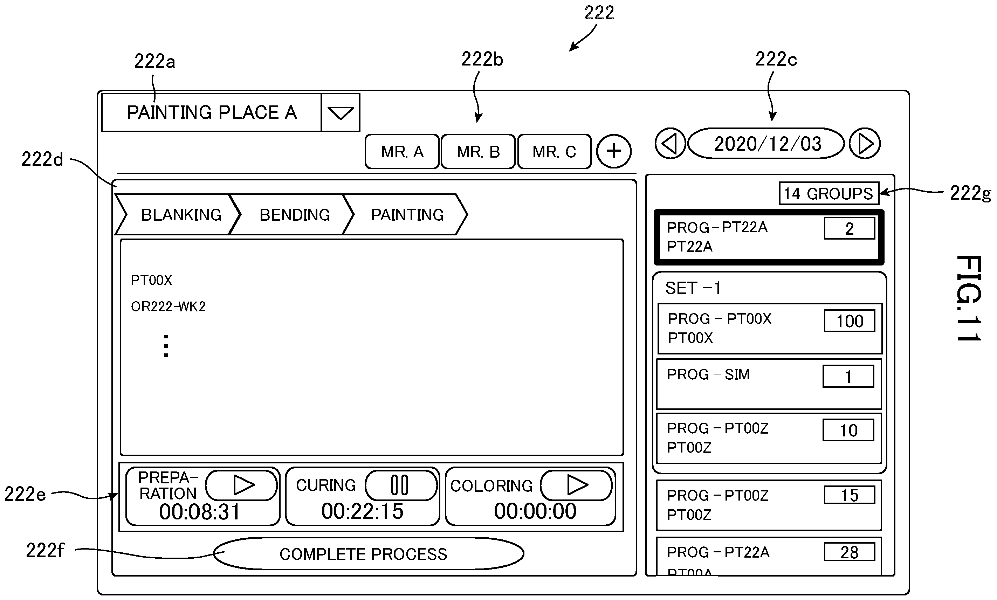

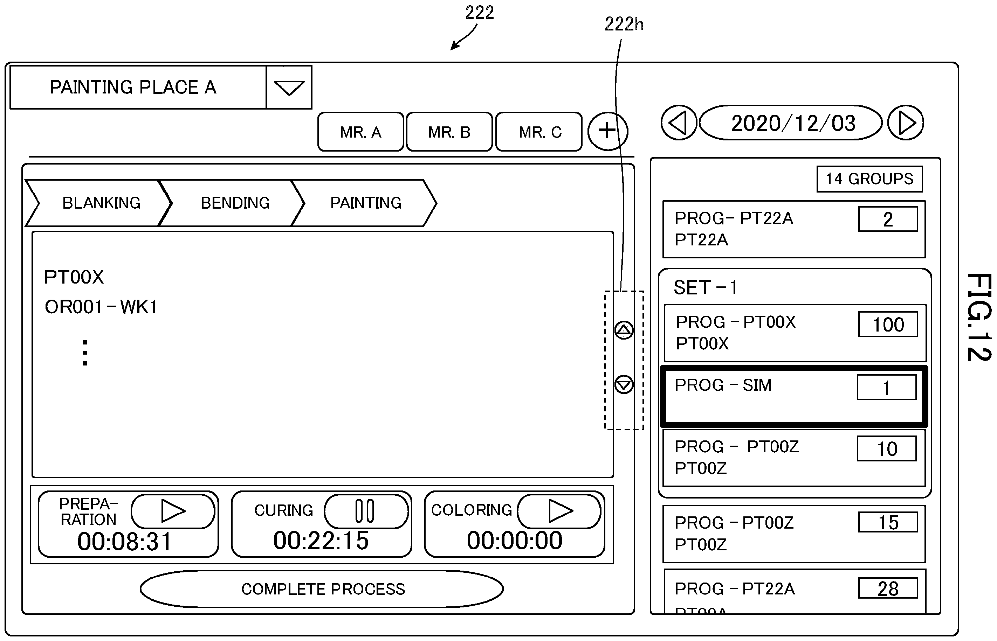

Figures 11 and 12 are diagrams showing examples of a work record management screen in this embodiment.

The display unit 220 includes a display as a display device and displays, for example, a work record management screen 222 as shown in Figures 11 and 12, in addition to the screen display function that the workplace terminal 200 is generally required. Further, the display unit 220 can be configured with a touch panel having the functions of the input unit 210. When the display unit 220 is configured with a touch panel, it becomes possible for the user, for example, to input record of work time to the workplace terminal 200 by operating the display unit 220.

As shown in Figures 11 and 12, the user can record and confirm information about workers related to work, on the work record management screen 222 displayed on the display unit 220. The work record management screen 222 includes a workplace display area 222a, a worker list display area 222b, a workday display area 222c, a work group display area 222d, an in-process work list display area 222e, a process completion button 222f, and a work group list display area 222g. Further, the work record management screen 222 includes a displayed work group changing button 222h.

The workplace display area 222a displays the name of a workplace being viewed. Further, the workplace display area 222a is configured such that any of the workplaces registered with the workplace master 145 in the storage unit 140 of the work management device 100 can be selected. In the worker list display area 222b, a list of workers in charge of work at a workplace displayed in the workplace display area 222a is displayed. Further, it is possible to perform editing of the worker list display area 222b, such as addition and deletion of workers.

The workday display area 222c displays a workday of being viewed. The workday display area 222c is configured such that a workday can be changed and displayed. The work group display area 222d displays detailed information about a work group selected in the work group list display area 222g. Specifically, the work group display area 222c displays the above-stated various kinds of information in pieces of work process information 142 included in the work group.

The in-process work list display area 222e displays individual work in each process, for example, in the case of a painting process, in-process work such as preparation, curing, and coloring. Further, the in-process work list display area 222e includes a start/stop button for each in-process work. By pressing any of the start/stop button, actual work time for corresponding in-process work can be recorded and viewed. The process completion button 222f is pressed when all the necessary in-process work is completed. For example, when curing is not required in the in-process work of the painting process, only actual work time for preparation and for coloring is recorded, and the process completion button 222f is pressed.

The work group list display area 222g displays a list of work groups and work group sets set for a workday selected in the workday display area 222c and for a workplace selected in the workplace display area 222a. The displayed work group changing button 222h is configured to be capable of, when a work group set is selected in the work group list display area 222g, changing detailed information about a work group in the work group set to be displayed in the work group display area 222d.

Note that the configurations of the input unit 210 and the display unit 220 are not limited to the above-described configurations, and are not limited to them as long as they have equivalent functions instead of the input unit 210 and the display unit 220 (e.g., display means or input means that can be used remotely).

The control unit 230 is configured, for example, with an integrated arithmetic calculation processing device including a CPU and a GPU. As shown in Figure 3, the control unit 230 includes a display control unit 232 that controls the display unit 220.

The storage unit 240 includes storage medium such as an HDD and an SSD, and stores various data in a readable and writable manner. As shown in Figure 3, the storage unit 240 stores workplace identifiers 242. Further, the storage unit 240 stores programs necessary for controlling each part of each workplace terminal 200. The workplace identifiers 242 are identifiers that can identify workplaces where the workplace terminals 200 are arranged, respectively. The workplace identifiers 242 may be stored in the storage unit 240 in advance or, in the case of one workplace terminal 200 being used at a plurality of workplaces, may be registered by reading two-dimensional codes or the like indicating the workplaces, which are used at the workplaces, respectively, or by receiving signals by beacons or the like installed at the workplaces, respectively.

The server 50 includes a storage medium such as an HDD and an SSD, and stores the production technology management database and the work management database. Since the server 50 can adopt various kinds of publicly-known configurations, detailed description of the configuration thereof will be omitted. The production technology management database includes the pieces of production arrangement information 12 created by the production management device 10 and the pieces of processing schedule information created by the design aided device 30. The work management database includes work groups and work group sets created by the work management device 100.

The processing machine 70 is the blanking machine 70a that processes a sheet by NC control, a secondary processing machine that processes an individual part after blanking, or the like. The blanking machine 70a is, for example, a laser processing machine, a turret punch press, a plasma processing machine, or a water jet processing machine. The secondary processing machine 70b is, for example, a bending machine such as a press brake, an NC milling machine, an NC lathe, a machining center, or a drill press. The processing machine 70 is configured to be communicable with the production management device 10, the design aided device 30, the server 50, and the work management device 100.

Further, the processing machine 70 is configured to be able to transmit processing machine processing results to the work management device 100 when processing is started, when processing is interrupted, and when processing is completed. The processing machine processing results include, for example, information such as the time corresponding to each of the start, interruption, and completion of processing for each sheet. The blanking machine 70a performs processing by, for example, reading sheet data of processing schedule information from the production technology management database stored in the server 50.

[Work Management Method According to This Embodiment]

Next, a work management method by the work management system 1 according to this embodiment will be described. The work management method according to this embodiment schematically includes a work process division step of dividing pieces of production arrangement information 12, each of which includes information about a product including one or more parts, and pieces of information about one or more of work processes for producing the parts and the product according to pieces of information about the individual work processes, into the pieces of work process information 142; and a grouping step of grouping the pieces of work process information 142 corresponding to the divided plurality of pieces of production arrangement information 12 into work groups.

Furthermore, the production management method according to this embodiment includes a production arrangement information creation step, a production arrangement information extraction step of extracting only parts and products included in each of work groups from a plurality of pieces of production arrangement information 12 to obtain pieces of group production arrangement information 12' for the work groups, respectively, an invoice issuance step of issuing a group production arrangement sheet for each of the pieces of group production arrangement information 12' as an invoice, a nesting step, an estimated work time calculation step, a work step, and an actual result reflection step.

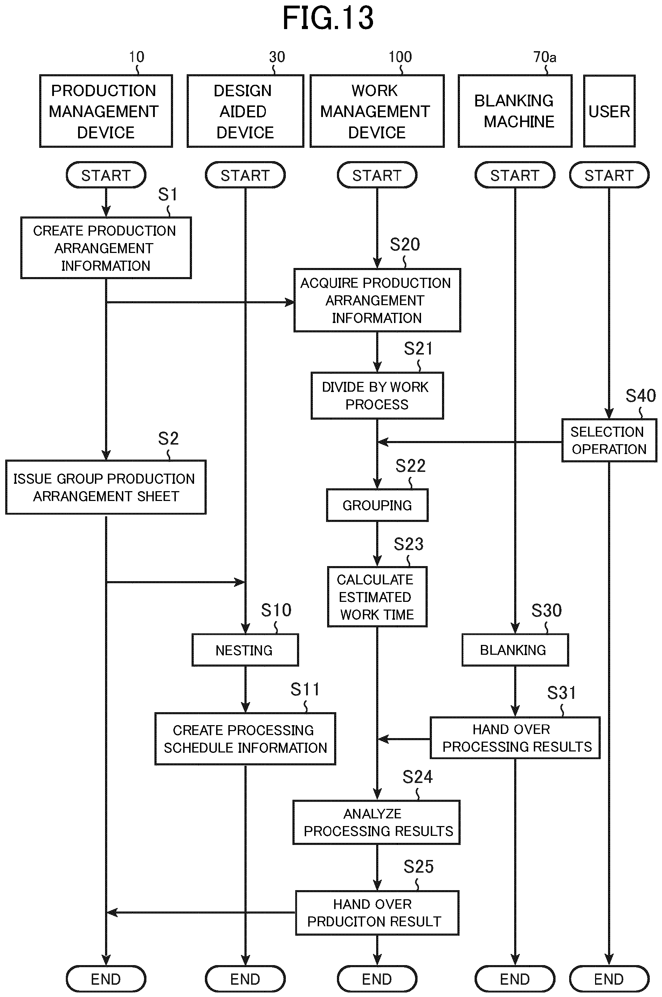

Figure 13 is a flowchart showing an example of the work management method in this embodiment.

The work management method according to this embodiment will be described in detail with reference to Figure 13. The description below will be made on the assumption that only the blanking process among the series of work processes is handled, and grouping of pieces of work process information 142 is manually performed by the user. The present invention, however, is not limited thereto. Further, it is assumed that a work process handled at each workplace in the factory is set in advance. Furthermore, it is assumed that setting of work group sets is not performed.

First, the production management device 10 creates and outputs pieces of production arrangement information 12 (S1 of Figure 13: the production arrangement information creation step). The production management device 10 stores the created pieces of production arrangement information 12 in the production technology management database of the server 50. Next, the work management device 100 acquires the pieces of production arrangement information 12 outputted by the production management device 10, from the production technology management database (S20 of Figure 13). The grouping unit 136 of the control unit 130 of the work management device 100 divides the acquired pieces of production arrangement information 12 according to pieces of information about individual work processes, into pieces of work process information 142 (S21 of Figure 13: the work process division step).

After that, the user operates the work management device 100 to select pieces of work process information 142 to be grouped about blanking process, on the work process information grouping screen 124 of the display unit 120 (S40 of Figure 13). Specifically, the user selects a plurality pieces of work process information 142 in the work process information list display area 124d and specifies a grouping pattern in the grouping pattern selection area 124e. After selecting the pieces of work process information 142 and the grouping pattern, the user presses the grouping button 124f. The grouping unit 136 of the control unit 130 of the work management device 100 groups the selected plurality of pieces of work process information 142 into work groups in the specified grouping pattern (S22 of Figure 13: the grouping step).

Further, the work management unit 138 of the control unit 130 of the work management device 100 calculates estimated work time for each of the work groups grouped by the grouping unit 136 (S23 of Figure 13: the estimated work time calculation step). The user confirms the grouped work groups in the work group list display area 124g on the work process information grouping screen 124 of the display unit 120 and, after that, presses the group registration button 124h. The work management unit 138 registers the grouped work groups with the work management database of the server 50.

After registering the work groups, the production management device 10 extracts only parts and products included in the grouped work groups, from the plurality of pieces of production arrangement information 12 to obtain pieces of group production arrangement information 12' (the production arrangement information extraction step). Then, the production management device 10 issues a group production arrangement sheet for each of the pieces of group production arrangement information 12' (S2 of Figure 13: the invoice issuance step). Then, the production management device 10 hands over the group production arrangement sheets to the design aided device 30. The design aided device 30 performs nesting for the work groups grouped by the work management device 100, based on the group production arrangement sheets, respectively, (S10 of Figure 13: the nesting step) to obtain pieces of processing schedule information about nested sheets (S11 of Figure 13). The pieces of processing schedule information created by the design aided device 30 are stored in the production technology management database of the server 50.

The blanking machine 70a calls the pieces of processing schedule information from the production technology management database of the server 50 to perform blanking (S30 of Figure 13: the work step). Further, the blanking machine 70a hands over processing machine processing results to the work management device 100 when blanking is started, when blanking is interrupted, and when blanking is completed (S31 of Figure 13). The work management device 100 stores the processing machine processing results in the processing results 146 of the storage unit 140.

After completion of the processing, the work management unit 138 of the control unit 130 of the work management device 100 analyzes the processing machine processing results handed over from the blanking machine 70a, and calculates actual work time for each of the pieces of work process information 142 included in the work group, from actual setup work time and actual processing work time (S24 of Figure 13). After that, the work management device 100 hands over a production result for each of the pieces of production arrangement information 12 to the production management device 10 (S25 of Figure 13). The production result includes information about the time of starting, discontinuing, and completing the work, actual work time, and the like, and actual man-hours. Through the above steps, the sequential work management method performed by the work management system 1 according to this embodiment is executed.

[Advantages of Work Management Device, Work Management System, Work Management Method, and Work Management Program According to This Embodiment]

As described above, the work management device 100 according to this embodiment is configured to be able to execute: a work process division process of dividing pieces of production arrangement information 12, each of the pieces of production arrangement information 12 including information about one of products, including one or more parts, and pieces of information about one or more of work processes for producing the parts and the product according to pieces of information about the individual work processes, into pieces of work process information 142; and a grouping process of grouping the pieces of work process information 142 corresponding to the divided plurality of pieces of production arrangement information 12 into work groups.

Then, by having such a configuration, the work management device 100 according to this embodiment has an advantage of, because of managing work not for each of pieces of production arrangement information 12 but by making groups based on the work processes included in the pieces of production arrangement information 12, being capable of eliminating wasteful duplicate management and duplicate work.

Further, the work management device 100 according to this embodiment further includes an input unit 110 and is configured to make it possible to manually group the pieces of work process information 142 via the input unit 110. By having such a configuration, the work management device 100 has an advantage of making it possible to group pieces of work process information 142 that cannot be automatically grouped.

Further, the work management device 100 according to this embodiment is configured to be capable of grouping the pieces of work process information 142 into the work groups such that a plurality among the pieces of work process information 142, including pieces of information about work processes of a same type among the work processes, respectively, are grouped as one of the work groups. By having such a configuration, the work management device 100 has an advantage of, because it is possible to perform collective management and work by performing grouping by the same type of work process, collectively inputting actual results of a plurality of parts and products involving work processes of the same type and being capable of reducing the number of times of duplicate setup work.

Further, the work management device 100 according to this embodiment is configured to be capable of grouping the pieces of work process information 142 into the work groups such that a plurality among the pieces of work process information 142, including pieces of information about parts or products of a same type among the products and parts of the products and pieces of information about work processes of a same type among the work processes, respectively, are grouped as one of the work groups. By having such a configuration, the work management device 100 has an advantage of being capable of collectively performing management and work of a plurality of parts and products of the same type and being capable of reducing duplicate management and duplicate work.

Further, the work management device 100 according to this embodiment is configured to be capable of grouping the pieces of work process information 142 into the work groups such that each of the individual pieces of work process information 142 is grouped as one of the work groups. By having such a configuration, the work management device 100 has an advantage of being capable of flexibly responding to management and work of parts and products for which there are no other parts and products of the same type, and parts and products involving a work process different from work processes of other parts and products of the same type.

Further, the work management device 100 according to this embodiment is configured to be able to execute: a work process identification process of identifying the work processes from the pieces of work process information 142 included in the grouped work groups, respectively; and a workplace association process of associating the work groups with pieces of information about workplaces to implement the identified work processes, respectively. By having such a configuration, the work management device 100 has an advantage of, because pieces of work process information 142 included in each work group being collectively associated with a workplace, being capable of reducing the number of times of duplicate association work. Further, the work management device 100 has an advantage of, because work group and a workplace are automatically associated, eliminating the need for the user to manually perform input.

Further, the work management device 100 according to this embodiment is configured to calculate estimated work time required for work of each of the grouped work groups. By having such a configuration, the work management device 100 has an advantage that, because estimated work time for each work group can be determined, it becomes easier to manage work plans.

Further, the work management device 100 according to this embodiment is configured to record actual work time required for work of each of the grouped work groups and calculate the actual work time for each of the pieces of work process information 142 included in each of the work group, from the recorded actual work time. By having such a configuration, the work management device 100 has an advantage that, even if work is collectively performed for each work group, it is possible to grasp actual work time for the parts or a product in each of the individual pieces of work process information 142.

Further, the work management device 100 according to this embodiment is configured to be capable of, for each of the grouped work groups, recording information about workers related to work of the work group. By having such a configuration, the work management device 100 has an advantage of being capable of managing workers of each process and work time of each worker in detail.

Further, the work management device 100 according to this embodiment is configured to judge whether a quantity of parts and products included in each of the grouped work groups, among the products and parts of the products, exceeds a workable quantity specified in advance, create a new work group if judging that the workable quantity is exceeded, and assign an excess of the parts and the products to the new work group. By having such a configuration, the work management device 100 has an advantage of being capable of preventing such work groups that cannot be realized in actual work processes from being made.

Further, in the work management system 1 according to this embodiment, the production management unit (the production management device 10) is configured to be capable of issuing invoices for the pieces of production arrangement information 12 and configured to be able to execute a production arrangement information extraction process of extracting only parts and products included in each of the work groups, among the products and the parts of the products, from the plurality of pieces of production arrangement information 12 to obtain pieces of group production arrangement information 12' for the work groups, respectively, and an invoice issuance process of issuing an invoice (a group production arrangement sheet) for each of the pieces of group production arrangement information 12'. By having such a configuration, the work management system 1 has an advantage of being capable of issuing only minimum necessary invoices.

[Variants]

Although a preferred embodiment of the present invention has been described above, the technical scope of the present invention is not limited to the scope described in the above-described embodiment. Various changes or improvements can be made in the above-described embodiment.

For example, though, in the above-described embodiment, the description has been made on the assumption that the work management device 100 includes the input unit 110 and is configured to be capable of manually grouping the pieces of work process information 142 via the input unit 110, the present invention is not limited thereto. The work management device 100 is not necessarily required to include the input unit 110.

Though, in the above-described embodiment, the description has been made on the assumption that the work management device 100 is configured to be capable of performing grouping in the first to third grouping patterns, the present invention is not limited thereto. The work management device 100 may be configured to be capable of performing grouping in a grouping pattern other than the first to third grouping patterns.

Though, in the above-described embodiment, the description has been made on the assumption that the work management device 100 is configured to be able to execute a work process identification process of identifying work processes from the pieces of work process information 142 included the grouped work groups, respectively, and a workplace association process of associating the work groups with pieces of information about workplaces to implement the identified work processes, respectively, the present invention is not limited thereto. The work management device 100 is not necessarily required to be capable of executing the work process identification process and the workplace association process.

Though, in the above-described embodiment, the description has been made on the assumption that the work management device 100 is configured to calculate estimated work time required for work of each of the grouped work groups, the present invention is not limited thereto. The work management device 100 is not necessarily required to calculate the estimated work time required for the work of each of the grouped work groups.

Though, in the above-described embodiment, the description has been made on the assumption that the work management device 100 is configured to record actual work time required for work of each of the grouped work groups and calculate the actual work time for each of the pieces of work process information 142 included in the work group, from the recorded actual work time, the present invention is not limited thereto. The work management device 100 is not necessarily required to record the actual work time required for the work of each of the grouped work groups. Further, the work management device 100 is not necessarily required to calculate the actual work time for each of the pieces of work process information 142 included in the work group from the actual work time of the work group.

Though, in the above-described embodiment, the description has been made on the assumption that the work management device 100 is configured to be capable of, for each of the grouped work groups, recording information about workers related to work of the work group, the present invention is not limited thereto. The work management device 100 is not necessarily required to, for each of the grouped work groups, record the information about the workers related to the work of the work group.

Though, in the above-described embodiment, the description has been made on the assumption that the work management device 100 is configured to judge whether a quantity of parts and products included in each of the grouped work groups, among the products and parts of the products, exceeds a workable quantity specified in advance, create a new work group if judging that the workable quantity is exceeded, and assign an excess of the parts and the products to the new work group, the present invention is not limited thereto. The work management device 100 is not necessarily required to judge whether the quantity of the parts and the products included in each of the grouped work groups exceeds the workable quantity specified in advance.

Though, in the above-described embodiment, the description has been made on the assumption that the production management unit (the production management device 10) is configured to be capable of issuing invoices for the pieces of production arrangement information 12 and configured to be able to execute a production arrangement information extraction process of extracting only parts and products included in each of the work groups, among the products and the parts of the products, from the plurality of pieces of production arrangement information 12 to obtain pieces of group production arrangement information 12' for the work groups, respectively, and an invoice issuance process of issuing an invoice (a group production arrangement sheet) for each of the pieces of group production arrangement information 12', the present invention is not limited thereto. The production management unit (the production management device 10) is not necessarily required to be capable of issuing the invoices for the pieces of production arrangement information 12. Further, the production management unit (the production management device 10) is not necessarily required to be capable of executing the production arrangement information extraction process and the invoice issuance process.

Though, in the above-described embodiment, the description has been made on the assumption that the work management system 1 includes the server 50, and the work management database is stored in the server 50, the present invention is not limited thereto. The work management system 1 is not necessarily required to include the server 50, and the work management database may be stored in the storage unit 140 of the work management device 100.

Though, in the above-described embodiment, the description has been made on the assumption that the work management system 1 includes the production management device 10, the design aided device 30, the work management device 100, the server 50, the processing machine 70 and the workplace terminals 200 as individual devices, the present invention is not limited thereto. A part or all of the above devices may be configured as one integrated body.

Reference Signs List

    1 work management system
    10 production management device
    12 production arrangement information
    12' group production arrangement information
    30 design aided device
    50 server
    70 processing machine
    70a blanking machine
    70b secondary processing machine
    100 work management device
    110 input unit
    120 display unit
    122 workplace setting screen
    122a work process list display area
    122b workplace list display area
    124 work process information grouping screen
    124a work process display area
    124b workday setting portion area
    124c workplace setting portion area
    124d work process information list display area
    124e grouping pattern selection area
    124f grouping button
    124g work group list display area
    124h group registration button
    126 work group set setting screen
    126a work process display area
    126b workday display area
    126c workplace display area
    126d work group list display area
    126e group set setting portion

126f group set registration button
130 control unit
132 display control unit
134 workplace management unit
136 grouping unit
138 work management unit
140 storage unit
142 work process information
144 process master
145 workplace master
146 processing results
148 work management program
200 workplace terminal
210 input unit
220 display unit
222 work record management screen
222a workplace display area
222b worker list display area
222c workday display area
222d work group display area
222e in-process work list display area
222f process completion button
222g work group list display area
222h displayed work group changing button
230 control unit
232 display control unit
240 storage unit
242 workplace identifier
AP access point

**Claims**

1. A work management device configured to be able to execute:

   a work process division process of dividing pieces of production arrangement information, each of the pieces of production arrangement information including information about one of products, including one or more parts, and pieces of information about one or more of work processes for producing the parts and the product according to pieces of information about the individual work processes, into pieces of work process information; and
   a grouping process of grouping the pieces of work process information corresponding to the divided plurality of pieces of production arrangement information into work groups.

2. The work management device according to claim 1,

   further comprising an input unit; and
   being configured to make it possible to manually group the pieces of work process information via the input unit.

3. The work management device according to claim 1 or 2,
   being configured to be capable of grouping the pieces of work process information into the work groups such that a plurality among the pieces of work process information, including pieces of information about work processes of a same type among the work processes, respectively, are grouped as one of the work groups.

4. The work management device according to claim 1 or 2,
   being configured to be capable of grouping the pieces of work process information into the work groups such that a plurality among the pieces of work process information, including pieces of information about parts or products of a same type among the products and parts of the products and pieces of information about work processes of a same type among the work processes, respectively, are grouped as one of the work groups.

5. The work management device according to claim 1 or 2,
being configured to be capable of grouping the pieces of work process information into the work groups such that each of the individual pieces of work process information is grouped as one of the work groups.

6. The work management device according to claim 1 or 2,
being configured to be able to execute:

a work process identification process of identifying the work processes from the pieces of work process information included in the grouped work groups, respectively; and
a workplace association process of associating the work groups with pieces of information about workplaces to implement the identified work processes, respectively.

7. The work management device according to claim 1 or 2,
being configured to calculate estimated work time required for work of each of the grouped work groups.

8. The work management device according to claim 1 or 2,
being configured to record actual work time required for work of each of the grouped work groups and calculate the actual work time for each of the pieces of work process information included in each of the work group, from the recorded actual work time.

9. The work management device according to claim 1 or **2,**
being configured to be capable of, for each of the grouped work groups, recording information about workers related to work of the work group.

10. The work management device according to claim 1 or 2,
being configured to judge whether a quantity of parts and products included in each of the grouped work groups, among the products and parts of the products, exceeds a workable quantity specified in advance, create a new work group if judging that the workable quantity is exceeded, and assign an excess of the parts and the products to the new work group.

11. A work management system comprising:

a work management device; and
a production management unit; wherein
the work management device is configured to be able to execute: a work process division process of dividing pieces of production arrangement information, each of the pieces of production arrangement information including information about one of products, including one or more parts, and pieces of information about one or more of work processes for producing the parts and the product according to pieces of information about the individual work processes, into pieces of work process information, and a grouping process of grouping the pieces of work process information corresponding to the divided plurality of pieces of production arrangement information into work groups; and
the production management unit is configured to create the pieces of production arrangement information.

12. The work management system according to claim 11,
wherein the production management unit is configured to be capable of issuing invoices for the pieces of production arrangement information and configured to be able to execute a production arrangement information extraction process of extracting only parts and products included in each of the work groups, among the products and the parts of the products, from the plurality of pieces of production arrangement information to obtain pieces of group production arrangement information for the work groups, respectively, and an invoice issuance process of issuing an invoice for each of the pieces of group production arrangement information.

13. A work management method comprising:

dividing pieces of production arrangement information, each of the pieces of production arrangement information including information about one of products, including one or more parts, and pieces of information about one or more of work processes for producing the parts and the product according to pieces of information about the individual work processes, into pieces of work process information; and
grouping the pieces of work process information corresponding to the divided plurality of pieces of production arrangement information into work groups.

14. A work management program configured to cause a work management device to execute:

a work process division process of dividing pieces of production arrangement information, each of the pieces of production arrangement information including information about one of products, including one or more parts, and pieces of information about one or more of work processes for producing the parts and the product according to pieces of information about the individual work processes, into pieces of work process information; and

a grouping process of grouping the pieces of work process information corresponding to the divided plurality of pieces of production arrangement information into work groups.

FIG.1

# FIG.2

WORK MANAGEMENT DEVICE — 100

INPUT UNIT — 110

DISPLAY UNIT — 120

CONTROL UNIT — 130

DISPLAY CONTROL UNIT — 132

WORKPLACE MANAGEMENT UNIT — 134

GROUPING UNIT — 136

WORK MANAGEMENT UNIT — 138

STORAGE UNIT — 140

WORK PROCESS INFORMATION — 142

PROCESS MASTER — 144

WORKPLACE MASTER — 145

PROCESSING RESULTS — 146

WORK MANAGEMENT PROGRAM — 148

# FIG.3

200

## WORKPLACE TERMINAL

INPUT UNIT ~210

DISPLAY UNIT ~220

230

### CONTROL UNIT

DISPLAY
CONTROL ~232
UNIT

240

### STORAGE UNIT

WORKPLACE ~242
IDENTIFIER

EP 4 535 105 A1

**FIG.4**

PRODUCTION ARRANGEMENT INFORMATION — 12

### PRODUCTION ARRANGEMENTS INFORMATION 1 — AAA INC.

PRODUCT  PT00A   QUANTITY : 10

PRODUCT   PROCESS

PT00A   [WELDING]

| PART | QUANTITY | PROCESS | | |
|------|----------|---------|--|--|
| PT00X | 3 | BLANKING | BENDING | PAINTING |
| PT00Y | 4 | BLANKING | BENDING | |

### PRODUCTION ARRANGEMENTS INFORMATION 2 — BBB INC.

PRODUCT  PT00B   QUANTITY : 30

PRODUCT   PROCESS

PT00B   [WELDING]

| PART | QUANTITY | PROCESS | | |
|------|----------|---------|--|--|
| PT00X | 4 | BLANKING | BENDING | PAINTING |
| PT00Y | 2 | BLANKING | PAINTING | |

:

WORK PROCESS INFORMATION — 142

| ORDER SOURCE | PRODUCT NAME/ PART NAME | QUANTITY | SERIAL NUMBER | PROCESS DEADLINE | PROCESS NAME |
|--------------|--------------------------|----------|---------------|------------------|--------------|
| AAA INC. | PT00A | 10 | OR‐001WK | 12/04 | WELDING |
| AAA INC. | PT00X | 30 | OR‐001WK1 | 12/03 | BLANKING |
| AAA INC. | PT00X | 30 | OR‐001WK1 | 12/03 | BENDING |
| AAA INC. | PT00X | 30 | OR‐001WK1 | 12/03 | PAINTING |
| AAA INC. | PT00Y | 40 | OR‐001WK2 | 12/03 | BLANKING |
| AAA INC. | PT00Y | 40 | OR‐001WK2 | 12/03 | BENDING |
| BBB INC. | PT00B | 30 | OR‐003WK | 12/05 | WELDING |
| BBB INC. | PT00X | 120 | OR‐003WK1 | 12/04 | BLANKING |
| BBB INC. | PT00X | 120 | OR‐003WK1 | 12/04 | BENDING |
| BBB INC. | PT00X | 120 | OR‐003WK1 | 12/04 | PAINTING |
| BBB INC. | PT00Z | 60 | OR‐003WK2 | 12/04 | BLANKING |
| BBB INC. | PT00Z | 60 | OR‐003WK2 | 12/04 | PAINTING |

:

WORK PROCESS INFORMATION — 142

| ORDER SOURCE | PRODUCT NAME/ PART NAME | QUANTITY | SERIAL NUMBER | PROCESS DEADLINE | PROCESS NAME |
|---|---|---|---|---|---|
| AAA INC. | PT00A | 10 | OR-001WK | 12/04 | WELDING |
| AAA INC. | PT00X | 30 | OR-001WK1 | 12/03 | BLANKING |
| AAA INC. | PT00X | 30 | OR-001WK1 | 12/03 | BENDING |
| AAA INC. | PT00X | 30 | OR-001WK1 | 12/03 | PAINTING |
| AAA INC. | PT00Y | 40 | OR-001WK2 | 12/03 | BLANKING |
| AAA INC. | PT00Y | 40 | OR-001WK2 | 12/03 | BENDING |
| BBB INC. | PT00B | 30 | OR-003WK | 12/05 | WELDING |
| BBB INC. | PT00X | 120 | OR-003WK1 | 12/04 | BLANKING |
| BBB INC. | PT00X | 120 | OR-003WK1 | 12/04 | BENDING |
| BBB INC. | PT00X | 120 | OR-003WK1 | 12/04 | PAINTING |
| BBB INC. | PT00Z | 60 | OR-003WK2 | 12/04 | BLANKING |
| BBB INC. | PT00Z | 60 | OR-003WK2 | 12/04 | PAINTING |

WORK GROUP

BLANKING PROCESS

BENDING PROCESS

PAINTING PROCESS

WELDING PROCESS

FIG.5

EP 4 535 105 A1

**FIG.6**

WORK PROCESS INFORMATION  142

WORK GROUP

| ORDER SOURCE | PRODUCT NAME/ PART NAME | QUANTITY | SERIAL NUMBER | PROCESS DEADLINE | PROCESS NAME |
|---|---|---|---|---|---|
| AAA INC. | PT00A | 10 | OR-001WK | 12/04 | WELDING |
| AAA INC. | PT00X | 30 | OR-001WK1 | 12/03 | BLANKING |
| AAA INC. | PT00X | 30 | OR-001WK1 | 12/03 | BENDING |
| AAA INC. | PT00X | 30 | OR-001WK1 | 12/03 | PAINTING |
| AAA INC. | PT00Y | 40 | OR-001WK2 | 12/03 | BLANKING |
| AAA INC. | PT00Y | 40 | OR-001WK2 | 12/03 | BENDING |
| BBB INC. | PT00B | 30 | OR-003WK | 12/05 | WELDING |
| BBB INC. | PT00X | 120 | OR-003WK1 | 12/04 | BLANKING |
| BBB INC. | PT00X | 120 | OR-003WK1 | 12/04 | BENDING |
| BBB INC. | PT00X | 120 | OR-003WK1 | 12/04 | PAINTING |
| BBB INC. | PT00Z | 60 | OR-003WK2 | 12/04 | BLANKING |
| BBB INC. | PT00Z | 60 | OR-003WK2 | 12/04 | PAINTING |

BLANKING PROCESS (PT00X)

BLANKING PROCESS (PT00Y)

BLANKING PROCESS (PT00Z)

BENDING PROCESS (PT00X)

EP 4 535 105 A1

**FIG.7**

142

| | WORK PROCESS INFORMATION | | | | |
|---|---|---|---|---|---|
| ORDER SOURCE | PRODUCT NAME/ PART NAME | QUANTITY | SERIAL NUMBER | PROCESS DEADLINE | PROCESS NAME |
| AAA INC. | PT00A | 10 | OR-001WK | 12/04 | WELDING |
| AAA INC. | PT00X | 30 | OR-001WK1 | 12/03 | BLANKING |
| AAA INC. | PT00X | 30 | OR-001WK1 | 12/03 | BENDING |
| AAA INC. | PT00X | 30 | OR-001WK1 | 12/03 | PAINTING |
| AAA INC. | PT00Y | 40 | OR-001WK2 | 12/03 | BLANKING |
| AAA INC. | PT00Y | 40 | OR-001WK2 | 12/03 | BENDING |
| BBB INC. | PT00B | 30 | OR-003WK | 12/05 | WELDING |
| BBB INC. | PT00X | 120 | OR-003WK1 | 12/04 | BLANKING |
| BBB INC. | PT00X | 120 | OR-003WK1 | 12/04 | BENDING |
| BBB INC. | PT00X | 120 | OR-003WK1 | 12/04 | PAINTING |
| BBB INC. | PT00Z | 60 | OR-003WK2 | 12/04 | BLANKING |
| BBB INC. | PT00Z | 60 | OR-003WK2 | 12/04 | PAINTING |

⋮

**WORK GROUP**

PT00X (OR-001WK1): BLANKING PROCESS

PT00Y (OR-001WK2): BLANKING PROCESS

PT00X (OR-003WK1): BLANKING PROCESS

PT00Z (OR-003WK2): BLANKING PROCESS

PT00X (OR-001WK1): BENDING PROCESS

PT00Y (OR-001WK2): BENDING PROCESS

PT00X (OR-003WK1): BENDING PROCESS

⋮

# FIG.8

122

122a

122b

PROCESS
LIST

WORKPLACE
LIST

BLANKING

BENDING

WELDING

PAINTING

ASSEMBLY

INSPECTION

PACKING

PAINTING PLACE A

PAINTING

PAINTING PLACE B

PAINTING

BACKYARD

PACKING

SHIPMENT

COMBINED MACHINE A

BLANKING

TAPPING

# FIG.9

WORKDAY  2020/12/03 ▼  — 124b
WORKPLACE  PAINTING PLACE A ▼  — 124c

124 — PAINTING PROCESS  — 124a

## WORK PROCESS INFORMATION LIST  — 124d

| | ORDER SOURCE COMPANY NAME | PRODUCT/ PART NAME | REQUIRED QUANTITY | SERIAL NUMBER | PROCESS DEADLINE | ESTIMATED PROCESSING TIME | ESTIMATED SETUP TIME |
|---|---|---|---|---|---|---|---|
| ☑ | AAA INC. | PT00X | 30 | OR001 −WK1 | 12/03 | 00:01:00 | 00:15:00 |
| ☑ | BBB INC. | PT00X | 120 | OR003 −WK1 | 12/03 | 00:01:00 | 00:15:00 |
| ☑ | BBB INC. | PT00Z | 60 | OR003 −WK2 | 12/04 | 00:02:00 | 00:10:00 |

142

124e —
◉ SAME PROCESS
○ SAME PROCESS/SAME PART
○ CONTINUOUS WORK
○ SIMULTANEOUS WORK

( GROUPING >> )  — 124f

## 124g  WORK GROUP LIST

PROG − PT00X   01:55:00
PT00X   [ 100 / 120 ]   ⊗   — 142
OR003−WK1

PROG − SIM   00:45:00   [ 50 ]   SIMULTANEOUS
PT00X   [ 30/30 ]   ⊗
OR001−WK1
PT00X   [ 20 / 120 ]   ⊗
OR003−WK1

PROG − PT00Z   00:30:00

( REGISTER WORK GROUP )  — 124h

26

FIG.10

PAINTING PROCESS

WORKDAY    2020/12/03
WORKPLACE    PAINTING PLACE A

PROG - PT00X    01:55:00

PT00X    100
OR003 - WK1

SET - 1

PROG - SIM    00:45:00    50    SIMULTANEOUS

PT00X    30
OR001 - WK1
⋮

SET - 1

PROG - PT00Z    00:30:00

PT00Z    10
OR003 - WK2

SET - 1

PROG - PT00Z    00:40:00

REGISTER WORK GROUP SET

FIG.11

A screen interface labeled 222 showing:
- 222a: PAINTING PLACE A (dropdown)
- 222b: MR. A | MR. B | MR. C (+)
- 222c: ◁ 2020/12/03 ▷
- 222d: BLANKING > BENDING > PAINTING
  - PT00X
  - OR222-WK2
  - ⋮
- 222e: PREPA-RATION ▷ 00:08:31 | CURING ❚❚ 00:22:15 | COLORING ▷ 00:00:00
- 222f: COMPLETE PROCESS
- 222g: 14 GROUPS
  - PROG-PT22A / PT22A — 2
  - SET-1
    - PROG-PT00X / PT00X — 100
    - PROG-SIM — 1
    - PROG-PT00Z / PT00Z — 10
  - PROG-PT00Z / PT00Z — 15
  - PROG-PT22A / PT00A — 28

FIG.12

# FIG.13

<div align="center">

**INTERNATIONAL SEARCH REPORT**

</div>

| International application No. |
| --- |
| **PCT/JP2023/018091** |

**A.    CLASSIFICATION OF SUBJECT MATTER**

*G05B 19/418*(2006.01)i; *G06Q 50/04*(2012.01)i
FI:    G05B19/418 Z; G06Q50/04

According to International Patent Classification (IPC) or to both national classification and IPC

**B.    FIELDS SEARCHED**

Minimum documentation searched (classification system followed by classification symbols)

G05B19/418; G06Q50/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2012-123568 A (CANON INC.) 28 June 2012 (2012-06-28) paragraphs [0006], [0007], [0024], [0027], [0028], [0030]-[0036], [0041]-[0043], fig. 5, 7-9 | 1-6, 10-14 |
| Y | paragraphs [0006], [0007], [0024], [0027], [0028], [0030]-[0036], [0041]-[0043], fig. 5, 7-9 | 7–9 |
| Y | JP 10-315102 A (TOYOTA MOTOR CORP.) 02 December 1998 (1998-12-02) paragraph [0080], fig. 14 | 7-8 |
| A | paragraph [0080], fig. 14 | 1-6, 9-14 |
| Y | JP 2020-181500 A (CANON INC.) 05 November 2020 (2020-11-05) paragraphs [0067], [0080]-[0085], fig. 11 | 9 |
| A | paragraphs [0067], [0080]-[0085], fig. 11 | 1-8, 10-14 |
| A | JP 2002-229627 A (KAWATETSU JOHO SYST K.K.) 16 August 2002 (2002-08-16) entire text, all drawings | 1-14 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 June 2023** | **04 July 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2023/018091**

| Patent document cited in search report | | Publication date (day/month/year) | Patent family member(s) | Publication date (day/month/year) |
|---|---|---|---|---|
| JP | 2012-123568 A | 28 June 2012 | US 2012/0140274 A1 paragraphs [0008], [0009], [0058], [0062], [0063], [0067]-[0074], [0081]-[0083], fig. 5, 7-9<br>CN 102591601 A | |
| JP | 10-315102 A | 02 December 1998 | (Family: none) | |
| JP | 2020-181500 A | 05 November 2020 | (Family: none) | |
| JP | 2002-229627 A | 16 August 2002 | (Family: none) | |

Form PCT/ISA/210 (patent family annex) (January 2015)

**EP 4 535 105 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003208211 A